(19) Europäisches Patentamt
European Patent Office
Office européen des brevets

(11) **EP 4 641 670 A1**

(12) **EUROPEAN PATENT APPLICATION**
published in accordance with Art. 153(4) EPC

(43) Date of publication:
**29.10.2025 Bulletin 2025/44**

(21) Application number: **24813791.1**

(22) Date of filing: **07.03.2024**

(51) International Patent Classification (IPC):
**H01M 4/36** (2006.01)  **H01M 4/525** (2010.01)
**H01M 4/505** (2010.01)

(52) Cooperative Patent Classification (CPC):
Y02E 60/10

(86) International application number:
**PCT/CN2024/080631**

(87) International publication number:
**WO 2024/244585 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 CN 202310609601**

(71) Applicant: **Contemporary Amperex Technology
Co., Limited
Ningde, Fujian 352100 (CN)**

(72) Inventors:
• **WU, Changxu**
  **Ningde, Fujian 352100 (CN)**
• **SHEN, Chongheng**
  **Ningde, Fujian 352100 (CN)**
• **HUAN, Shuxing**
  **Ningde, Fujian 352100 (CN)**
• **WANG, Bangrun**
  **Ningde, Fujian 352100 (CN)**
• **LIU, Na**
  **Ningde, Fujian 352100 (CN)**

(74) Representative: **Kraus & Lederer PartGmbB
Thomas-Wimmer-Ring 15
80539 München (DE)**

(54) **POSITIVE ELECTRODE ACTIVE MATERIAL AND PREPARATION METHOD THEREFOR, POSITIVE ELECTRODE SHEET, BATTERY AND ELECTRIC DEVICE**

(57)    Provided are a positive electrode active material and a preparation method therefor, a positive electrode plate, a battery and an electrical device. The positive electrode active material comprises a lithium-rich manganese-based positive electrode material and a coating layer distributed on at least a portion of the surface of the lithium-rich manganese-based positive electrode material, wherein the coating layer comprises at least one of a metal oxide and a metal fluoride. The positive electrode active material has a gram capacity of greater than or equal to 220 mAh/g, and satisfies at least one of the following conditions: the oxygen defect indicator is greater than or equal to 2.12; the microscopic stress is 0.1%-1.5%; in a Fourier infrared spectrum, the M-O/Mn-O peak intensity ratio is 25-40; and the specific surface area is 0.9 m$^2$/g-3.5 m$^2$/g. By specifically coating the lithium-rich manganese-based positive electrode material before and after pickling, the positive electrode active material meeting the specific microscopic indicator range can be prepared, such that the positive electrode active material has a relatively high gram capacity, and also has relatively good cycling stability.

Coat a lithium-rich manganese-based positive electrode material with a primary coating raw material and sinter the resultant to obtain a primary coating material

Wash the primary coating material with a solution containing an acid and/or an acid salt to obtain a pickled primary coating material

Coat the pickled primary coating material with a secondary coating raw material and sinter the resultant to obtain a positive electrode active material

**FIG. 5**

**Description**

**Cross-Reference to Related Applications**

The present application claims priority to Chinese Patent Application 202310609601.1 filed on May 26, 2023 and entitled "POSITIVE ELECTRODE ACTIVE MATERIAL AND PREPARATION METHOD THEREFOR, POSITIVE ELECTRODE PLATE, BATTERY AND ELECTRICAL DEVICE", the content of which is incorporated herein by reference in its entirety.

**TECHNICAL FIELD**

The present application relates to the technical field of batteries, and in particular, to a positive electrode active material and a preparation method therefor, a positive electrode plate, a battery, and an electrical device.

**BACKGROUND**

At present, in order to increase the gram capacity of lithium-rich manganese-based positive electrode materials, acid solutions are used in some solutions to wash the lithium-rich manganese-based positive electrode materials. However, after washing, the cycling stability of the lithium-rich manganese-based positive electrode materials decreases.

**SUMMARY OF THE INVENTION**

In view of the above problems, the present application provides a positive electrode active material and a preparation method thereof, a positive electrode plate, a battery, and an electrical device. The preparation method involves specifically coating a lithium-rich manganese-based positive electrode material respectively before and after pickling, and the formed positive electrode active material has a relatively high gram capacity and also relatively good cycling stability.

Embodiments of the present application are realized as follows.

In a first aspect, an embodiment of the present application provides a positive electrode active material. The positive electrode active material comprises a lithium-rich manganese-based positive electrode material and a coating layer distributed on at least a portion of the surface of the lithium-rich manganese-based positive electrode material. The lithium-rich manganese-based positive electrode material comprises the element M, and the element M includes one or more of Mg, Nb, Cr, Ce, Fe, Ta, B, Al, V, Ti, Zr, Sn, and Mo. The coating layer comprises at least one of a metal oxide and a metal fluoride. The gram capacity of the positive electrode active material is greater than or equal to 220 mAh/g. The positive electrode active material satisfies at least one of the following conditions (a1) to (d1): (a1) in a refined result of an X-ray diffraction spectrum of the positive electrode active material, the oxygen defect indicator is greater than or equal to 2.12; (b1) the microscopic stress of the positive electrode active material is 0.1-1.5%; (c1) in a Fourier infrared spectrum of the positive electrode active material, the M-O/Mn-O peak intensity ratio is 25-40; and (d1) the specific surface area of the positive electrode active material is 0.9 $m^2$/g to 3.5 $m^2$/g.

The positive electrode active material provided in the embodiment of the present application has a relatively high gram capacity; moreover, at least one of the oxygen defect indicator, microscopic stress, M-O/Mn-O peak intensity ratio, and specific surface area meets a specific range, so that the positive electrode active material has relatively good storage performance and cycling stability.

In some embodiments, the positive electrode active material satisfies at least one of the following conditions (a2) to (d2): (a2) in a refined result of an X-ray diffraction spectrum of the positive electrode active material, the oxygen defect indicator is greater than or equal to 2.72; (b2) the microscopic stress of the positive electrode active material is 0.1-0.8%; (c2) in a Fourier infrared spectrum of the positive electrode active material, the M-O/Mn-O peak intensity ratio is 30-40; and (d2) the specific surface area of the positive electrode active material is 1.5 $m^2$/g to 2.5 $m^2$/g. In these embodiments, at least one of the oxygen defect indicator, microscopic stress, M-O/Mn-O peak intensity ratio, and specific surface area of the positive electrode active material meets a further range, which is conducive to the positive electrode active material having a better storage performance and cycling stability.

In some embodiments, the elemental composition of the coating layer comprises one or more of the element Al, the element Ce, and the element Co, and one or more of the element Zr, the element B, and the element Ti. In these embodiments, the coating formed by the coating raw materials corresponding to the element Al, the element Ce, and the element Co can better protect the lithium-rich manganese-based positive electrode material during pickling, and the coating formed by the coating raw materials corresponding to the element Zr, the element B, and the element Ti can better modify the lithium-rich manganese-based positive electrode material after pickling, so that the coating layer can better improve the cycling stability of the positive electrode active material; moreover, the element B can activate a lithium-containing rock salt phase on the surface of the material, which is beneficial to increasing the gram capacity.

In some embodiments, in the coating layer, the ratio of the total mass of the element Al and the element Ce to the total mass of the element Zr and the element B is 1:(0.5-2). In these embodiments, the elements in the coating layer meet a specific ratio, and the coating layer can better improve the cycling stability of the positive electrode active material.

In some embodiments, in the positive electrode active material, the total content of the element Al, the element Ce, the element Co, the element Zr, the element B, and the element Ti in the coating layer is less than or equal to 5000 ppm. In these embodiments, the content of the element components in the coating layer is lower than a specific range such that while the coating layer effectively improves the cycling stability of the positive electrode active material, the positive electrode active material has a relatively good gram capacity and is beneficial to improving the first-cycle efficiency of the battery.

In some embodiments, the coating layer comprises one or more of aluminum fluoride, aluminum oxide, cerium fluoride, and cerium oxide, and one or more of zirconium oxide, zirconium fluoride, boric acid, and zirconium boride. In these embodiments, aluminum fluoride, aluminum oxide, cerium fluoride, and cerium oxide have relatively high sintering temperature resistance, can coat the surface of the lithium-rich manganese-based positive electrode material in the form of a dense coating through a high sintering temperature, and can better protect the lithium-rich manganese-based positive electrode material during pickling, which is beneficial to improving the cycling stability. Zirconium oxide, zirconium fluoride, boric acid, and zirconium boride can better modify the surface of the lithium-rich manganese-based positive electrode material, which is beneficial to improving the cycling stability, and can coat the surface of the lithium-rich manganese-based positive electrode material at a relatively low sintering temperature, which is beneficial to improving the gram capacity of the positive electrode active material and the first-cycle efficiency of the battery.

In some embodiments, the ratio of the volume average particle size Dv50 of the lithium-rich manganese-based positive electrode material to the thickness of the coating layer is (5.5-6.5):(0.2-0.8). In these embodiments, the lithium-rich manganese-based positive electrode material and the coating layer meet an appropriate size ratio, such that while the coating layer effectively improves the cycling stability of the positive electrode active material, the positive electrode active material has a relatively good gram capacity and is beneficial to improving the first-cycle efficiency of the battery.

In some embodiments, the thickness of the coating layer is 0.2-0.8 $\mu$m. In these embodiments, the coating layer has a suitable thickness, which can better play a protective role and improve the cycling stability. Compared with a coating layer with an excessively large thickness, it is also beneficial to increasing the gram capacity of the positive electrode active material and the first-cycle efficiency of the battery.

In some embodiments, the lithium-rich manganese-based positive electrode material comprises Li[Li$_x$Ni$_a$Co$_b$Mn$_c$M$_a$]O$_{2-e}$, where x + a + b + c + d = 1, x > 0, a > 0, 0 < b < 0.1, c > 0, d $\geq$ 0, and 0 $\leq$ e $\leq$ 0.2. In these embodiments, the lithium-rich manganese-based positive electrode material has a relatively low cobalt content, which can reduce the cost.

In a second aspect, an embodiment of the present application provides a method for preparing a positive electrode active material, comprising coating a lithium-rich manganese-based positive electrode material with a primary coating raw material and sintering the resultant to obtain a primary coating material; washing the primary coating material with a solution containing an acid and/or an acid salt to obtain a pickled primary coating material; and coating the pickled primary coating material with a secondary coating raw material and sintering the resultant to obtain the positive electrode active material. The primary coating raw material includes one or more of a metal oxide and a metal fluoride; and the secondary coating raw material includes one or more of a metal oxide, a metal fluoride, and a boride.

In the method for preparing a positive electrode active material, as provided by the embodiment of the present application, the gram capacity is increased by pickling; coating with a specific type of primary coating raw material before pickling can protect the lithium-rich manganese-based positive electrode material during pickling and improve gas production; and coating with a specific type of secondary coating raw material after pickling can modify the surface of the lithium-rich manganese-based positive electrode material after pickling. In the preparation method, the lithium-rich manganese-based positive electrode material is specifically coated respectively before and after pickling to form a positive electrode active material that meets a specific microscopic indicator range. The specific microscopic indicator includes at least one of oxygen defect indicator, microscopic stress, M-O/Mn-O peak intensity ratio, and specific surface area. The element M is an optional doping element for the lithium-rich manganese-based positive electrode material, so that the positive electrode active material has a relatively good storage performance and cycling stability.

In some embodiments, during the coating of the lithium-rich manganese-based positive electrode material with the primary coating raw material and the sintering of the resultant, the sintering temperature is 500-750°C; and optionally, the sintering time is 6-12 h. In these embodiments, after coating with the primary coating raw material, a relatively high specific sintering temperature is selected, which is beneficial to better melting the primary coating raw material and thus makes it firmly coated on the surface of the lithium-rich manganese-based positive electrode material, thereby facilitating better protection of the lithium-rich manganese-based positive electrode material during pickling. Optionally, selecting a suitable sintering time is beneficial to balancing efficiency and sintering effect.

In some embodiments, the primary coating raw material includes one or more of the element Al, the element Ce, and the element Co; and optionally, the primary coating raw material includes one or more of aluminum fluoride, aluminum oxide, cerium fluoride, and cerium oxide. In these embodiments, the primary coating raw material has a specific composition, and can form a dense coating on the surface of the lithium-rich manganese-based positive electrode material after sintering, thereby enabling better protection of the lithium-rich manganese-based positive electrode material and facilitating the improvement of the cycling stability.

In some embodiments, during the coating of the pickled primary coating material with a secondary coating raw material and the sintering of the resultant, the sintering temperature is 350-550°C; optionally, the sintering time is 6-12 h. In these embodiments, after coating with the secondary coating raw material, a relatively low specific sintering temperature is selected, which can better melt the secondary coating raw material, thereby better modifying the surface of the lithium-rich manganese-based positive electrode material; and compared with an excessively high sintering temperature, it can also improve the conversion of the surface defect spinel structure into a rock salt phase, which is beneficial to improving the gram capacity of the positive electrode active material and the first-cycle efficiency of the battery. Optionally, selecting a suitable sintering time is beneficial to balancing efficiency and sintering effect.

In some embodiments, the secondary coating raw material includes one or more of the element Zr, the element B, and the element Ti; and optionally, the secondary coating raw material includes one or more of zirconium oxide, zirconium fluoride, boric acid, and zirconium boride. In these embodiments, the secondary coating raw material has a specific composition, so that the surface of the lithium-rich manganese-based positive electrode material can be can better modified, which is beneficial to improving the cycling stability; in addition, it can coat the surface of the lithium-rich manganese-based positive electrode material at a relatively low sintering temperature, which is beneficial to improving the gram capacity of the positive electrode active material and the first-cycle efficiency of the battery.

In some embodiments, the primary coating raw material includes one or more of aluminum fluoride, aluminum oxide, cerium fluoride, and cerium oxide, the secondary coating raw material includes one or more of zirconium oxide, zirconium fluoride, boric acid, and zirconium boride, and the ratio of the total mass of the element Al and the element Ce in the primary coating raw material to the total mass of the element Zr and the element B in the secondary coating raw material is 1:(0.5-2). In these embodiments, the compositions of the primary coating raw material and the secondary coating raw material meet specific ratios, so that the coating layer can better improve the cycling stability of the positive electrode active material.

In some embodiments, the primary coating raw material includes one or more of the element Al, the element Ce, and the element Co, the secondary coating raw material includes one or more of the element Zr, the element B, and the element Ti, and the primary coating raw material and the secondary coating raw material form a coating layer distributed on at least a portion of the surface of the lithium-rich manganese-based positive electrode material; and in the positive electrode active material, the total content of the element Al, the element Ce, the element Co, the element Zr, the element B, and the element Ti in the coating layer is less than or equal to 5000 ppm. In these embodiments, the content of the element components in the coating layer is lower than a specific range such that while the coating layer effectively improves the cycling stability of the positive electrode active material, the positive electrode active material has a relatively good gram capacity and is beneficial to improving the first-cycle efficiency of the battery.

In some embodiments, the primary coating raw material and the secondary coating raw material form a coating layer distributed on at least a portion of the surface of the lithium-rich manganese-based positive electrode material, and the thickness of the coating layer is 0.2-0.8 $\mu$m. In these embodiments, the coating layer has a suitable thickness, which can better play a protective role and improve the cycling stability. Compared with a coating layer with an excessively large **thickness,** it is also beneficial to increasing the gram capacity of the positive electrode active material and the first-cycle efficiency of the battery.

In some embodiments, the lithium-rich manganese-based positive electrode material comprises $Li[Li_xNi_{a-}Co_bMn_cM_a]O_{2-e}$, where $x + a + b + c + d = 1$, $x > 0$, $a > 0$, $0 < b < 0.1$, $c > 0$, $d \geq 0$, and $0 \leq e \leq 0.2$, and the element M includes one or more of Mg, Nb, Cr, Ce, Fe, Ta, B, Al, V, Ti, Zr, Sn, and Mo. In these embodiments, the lithium-rich manganese-based positive electrode material has a relatively low cobalt content, which can reduce the cost, and the lithium-rich manganese-based positive electrode material has a specific doping element M, which is beneficial to improving the gram capacity of the positive electrode active material and the first-cycle efficiency of the battery.

In some embodiments, during the washing of the primary coating material with the solution containing the acid and/or the acid salt, the solution containing the acid and/or the acid salt comprises an organic acid and/or an organic acid salt, the pH value of the solution containing the acid and/or the acid salt is 2-8, and the washing time is 0.25-4 h; optionally, the solution containing the acid and/or the acid salt comprises one or more of citric acid, ammonium citrate, and diammonium hydrogen citrate. In these embodiments, pickling is performed under specific pH value and washing time conditions, so that the gram capacity of the positive electrode active material and the first-cycle efficiency of the battery can be better improved.

In a third aspect, an embodiment of the present application provides a positive electrode plate, comprising the positive electrode active material as described in the above embodiment, or a positive electrode active material prepared by the method for preparing a positive electrode active material as described in the above embodiment.

In a fourth aspect, an embodiment of the present application provides a battery, comprising the positive electrode plate according to the above embodiment.

In a fifth aspect, an embodiment of the present application further provides an electrical device, comprising the battery according to the above embodiment.

The foregoing description is merely an overview of the technical solutions of the embodiments of the present application. In order to enable a clearer understanding of the technical solutions of the present application so that the present application can be implemented according to the content of the specification and to make the foregoing and other objectives, features, and advantages of the present application more evident and comprehensible, specific embodiments of the present application are provided hereby below.

## DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skill in the art, other relevant drawings may also be obtained based on these drawings without creative efforts.

FIG. 1 is a schematic structural view of a vehicle provided in some embodiments of the present application;

FIG. 2 is an exploded view of a battery provided in some embodiments of the present application;

FIG. 3 is an exploded view of a battery cell provided in some embodiments of the present application;

FIG. 4 is a schematic structural view of an electrode assembly provided in some embodiments of the present application; and

FIG. 5 is a process flow chart of a method for preparing a negative electrode active material, as provided in some embodiments of the present application.

Reference numerals:

1000 - vehicle;

100 - battery; 200 - controller; 300 - motor;

10 - box body; 11 - first part; 12 - second part; 13 - accommodating space;

20 - battery cell; 21 - shell; 22 - electrode assembly; 23 - electrode terminal; 24 - pressure relief structure;

211 - case; 212 - cover; 213 - confined space; and

221 - positive electrode plate; 222 - negative electrode plate; 223 - separator.

## DETAILED DESCRIPTION

In order to make the objects, technical solutions, and advantages of the embodiments of the present application more clear, the technical solutions of the embodiments of the present application will be described clearly and completely below. In embodiments in which no specific conditions are indicated, conventional conditions or conditions recommended by manufacturers are followed. The reagents or instruments used in which no manufacturers are indicated are all commercially available conventional products.

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated.

In the description of the embodiments of the present application, the technical term "and/or", such as "Feature 1 and/or Feature 2", means "Feature 1" alone, "Feature 2" alone, or "Feature 1" plus "Feature 2". Moreover, the character "/" herein generally indicates that the context objects are in an "or" relationship.

In the description of the embodiments of the present application, the meaning of "more" in "one or more" is two or more, unless otherwise specified.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the embodiments of the present application, like reference numerals indicate like components, and for the sake of brevity, detailed description of the same components is omitted in different embodiments. It should be understood that the thickness, length, width, and other dimensions of the various components in the embodiments of the present application as shown in the drawings, and the overall thickness, length, width, and other dimensions of an integrated apparatus, are for illustrative purpose only and should not constitute any limitation to the present application.

From the perspective of the development of the market situation, power batteries are increasingly more widely used. Power batteries are not only applied in energy storage power systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

With the continuous development of the new energy industry, the market has put forward more diversified demands on positive electrode active materials. Lithium-rich manganese-based positive electrode active materials have attracted much attention due to their advantages such as high voltage, high gram capacity, good safety, abundant resources, and low pollution, and are considered to be the next generation of positive electrode active materials with great potential.

Improving the gram capacity of positive electrode active materials and the first-cycle efficiency of batteries is a current research direction. Especially in the case of considering cost reduction, some studies have begun to use lithium-rich manganese-based positive electrode materials with a low cobalt content. However, the lithium-rich manganese-based positive electrode materials with a low cobalt content lead to a decreased gram capacity. Therefore, it becomes more important to effectively increase the gram capacity thereof.

In order to increase the gram capacity of a lithium-rich manganese-based positive electrode materials and the first-cycle efficiency of batteries, pickling is used in some solutions to wash the lithium-rich manganese-based positive electrode materials. In some technical solutions, alkaline washing is used for washing, and a meat-aluminate solution and a pyrophosphate solution are used as treatment solutions; however, this alkaline washing method may cause the pH value of the material to rise and excessive residual alkali and may also introduce new impurity ions such as Na, thereby affecting the performance of the positive electrode active material. Since alkaline washing has the above problems, pickling is used in some technical solutions for washing, and a solution containing an acid and/or an acid salt is used as a treatment solution; however, this pickling method is likely to damage the surface of the lithium-rich manganese-based positive electrode material, causing the cycling stability of the lithium-rich manganese-based positive electrode material to decrease.

On this basis, an embodiment of the present application proposes a positive electrode active material and a preparation method therefor. The method involves washing a lithium-rich manganese-based positive electrode material by means of pickling. On this basis, the lithium-rich manganese-based positive electrode material is specifically coated respectively before and after pickling to form a positive electrode active material that meets a specific microscopic indicator range. The element M is an optional doping element for the lithium-rich manganese-based positive electrode material. The specific microscopic indicator includes at least one of oxygen defect indicator, microscopic stress, M-O/Mn-O peak intensity ratio, and specific surface area. Among them, a suitable oxygen defect indicator is beneficial to reducing an aggravated oxygen release phenomenon caused by oxygen defects, a suitable microscopic stress can improve a particle rupture phenomenon caused by the generation and release of residual stress during cycling, a suitable M-O/Mn-O peak intensity ratio reflects better coating protection and can improve the long-term storage and cycling performance of the battery, and a suitable specific surface area can result in a relatively good capacity performance, a relatively good storage performance, and a performance of relatively low production of gases participating in side reactions, so that the positive electrode active material has a relatively good storage performance and cycling stability. Therefore, in the technical solutions provided in the embodiments of the present application, the lithium-rich manganese-based positive electrode material is specifically coated respectively before and after pickling, and the resulting positive electrode active material has a relatively high gram capacity and is beneficial to improving the first-cycle efficiency of the battery, and also has a relatively good cycling stability.

A battery cell disclosed in an embodiment of the present application, in which the positive electrode plate is used, can be used for, without limitation, an electrical apparatus such as a vehicle, a ship, or an aircraft. An embodiment of the present application provides an electrical apparatus in which a battery is used as a power source. The electrical apparatus can be, but is not limited to, a mobile phone, a tablet, a laptop, an electric toy, an electric tool, a storage battery car, an electric vehicle, a ship, a spacecraft, etc. Electric toys can include fixed or mobile electric toys, e.g., game consoles, electric car toys, electric ship toys, and electric airplane toys, and the spacecraft can include airplanes, rockets, space shuttles, spaceships, etc.

For the convenience of explanation, the following embodiments are used for illustration where a vehicle is taken, for example, as an electrical device in an embodiment of the present application.

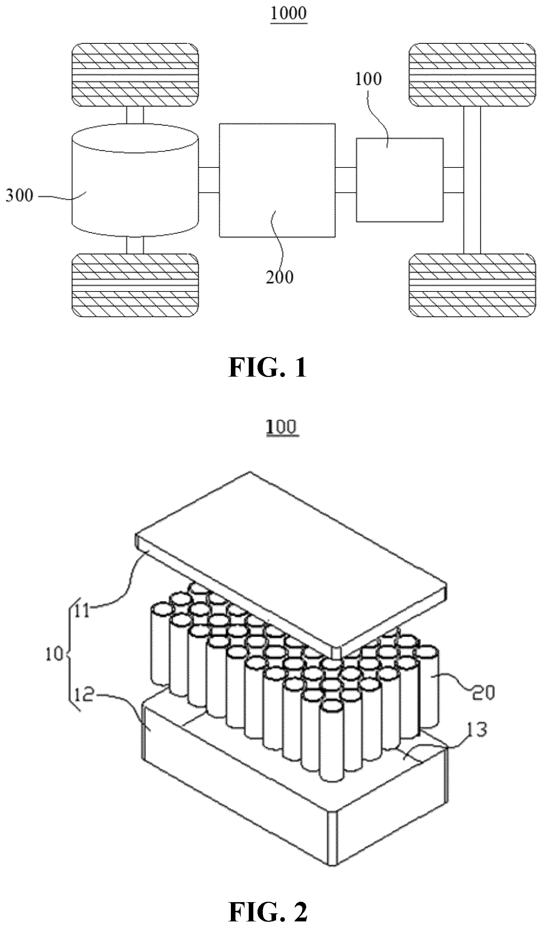

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, etc. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further comprise a controller 200 and a motor 300. The controller 200 is used for controlling the battery 100 to supply power to the motor 300, for example, for the operating power demand when starting, navigating, and driving the vehicle 1000.

In some embodiments of the present application, the battery 100 can be used not only as the operating power source of the vehicle 1000, but also as a driving power source of the vehicle 1000 to replace or partially replace fuel or natural gas to provide driving power for the vehicle 1000.

In the present application, the battery 100 refers to a single physical module comprising one or more battery cells 20 to provide a certain voltage and capacity, which can be in the form of a battery pack, a battery module, etc. The battery 100 can comprise a box body 10 used for encapsulating one or more battery cells 20. The box body 10 can prevent liquid or other foreign matters from affecting the charging or discharging of the battery cell(s) 20.

Referring to FIG. 2, FIG. 2 is an exploded view of the battery 100 according to some embodiments of the present application. The battery 100 comprises a box body 10 and a plurality of battery cells 20. The plurality of battery cells 20 are accommodated in the box body 10. The box body 10 is used for accommodating the battery cell 20, and the box body 10 can have various structures. In some embodiments, the box body 10 can comprise a first part 11 and a second part 12. The first part 11 and the second part 12 cover each other, and the first part 11 and the second part 12 together define the accommodating space 13 for accommodating the battery cell 20. The second part 12 can have a hollow structure with one end open, and the first part 11 has a plate-like structure. The first part 11 covers the open side of the second part 12 to form the box body 10 having the accommodating space 13. The first part 11 and the second part 12 can also both have a hollow structure with one side open, and the open side of the first part 11 covers the open side of the second part 12 to form the box body 10 having the accommodating space 13. Of course, the first part 11 and the second part 12 can have various shapes, such as a cylinder and a cuboid.

In the battery 100, the plurality of battery cells 20 can be connected in series, or in parallel, or in parallel-series. Being connected in parallel-series means that the plurality of battery cells 20 are connected in both series and parallel. The plurality of battery cells 20 can be directly connected in series, or in parallel, or in parallel-series, and an entirety composed of the plurality of battery cells 20 is then accommodated in the box body 10. The case may also be that a plurality of battery cells 20 are connected in series, or in parallel, or in parallel-series in advance to form a battery module, and a plurality of battery modules are then connected in series, or in parallel, or in parallel-series to form an entirety, which is accommodated in the box body 10. The battery 100 can also include other structures. For example, a plurality of battery cells 20 can be electrically connected by a busbar component to realize the connection of the plurality of battery cells 20 in series, or in parallel, or in parallel-series.

The battery cell 20 refers to the smallest unit constituting a battery pack. The battery cell 20 can be, without limitation, a lithium-sulfur battery, a sodium-ion battery, or a magnesium-ion battery.

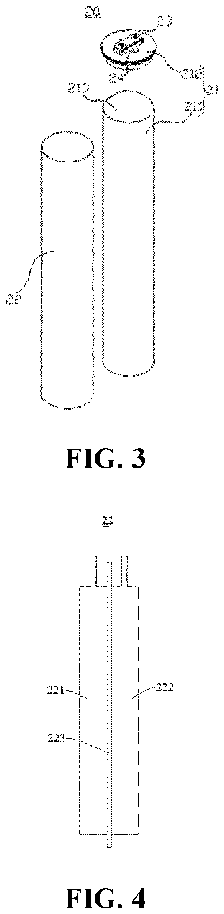

Referring to FIG. 3, the battery cell 20 comprises a shell 21, an electrode assembly 22, and an electrolyte solution, where the electrode assembly 22 and the electrolyte solution are both accommodated in the shell 21.

The shell 21 can comprise a case 211 and a cover 212. The case 211 is an assembly for fitting the cover 212 to form an internal confined space 213 of the battery cell 20. The formed internal confined space 213 can be used for accommodating the electrode assembly 22, the electrolyte solution, and other components. The cover 212 refers to a component that covers the opening of the shell 211 to isolate the internal environment of the battery cell 20 from the external environment. The shape of the cover 212 can fit the shape of the case 211 to match the case 211. Functional components such as an electrode terminal 23 and a pressure relief structure 24 can also be provided on the cover 212. A sealing ring can be arranged between the opening of the case 211 and the cover 212 to achieve sealing between the case 211 and the cover 212.

The case 211 and the cover 212 can have various shapes and sizes, such as a cuboid, a cylinder, or a hexagonal prism. Specifically, the shapes of the case 211 and the cover 212 can be determined according to the specific shape and size of the electrode assembly 22. The case 211 and the cover 212 can be made of various materials, such as but not limited to copper, iron, aluminum, stainless steel, an aluminum alloy, and other metals. The sealing ring can be made of various materials, such as but not limited to PP (polypropylene), PC (polycarbonate), PET (polyethylene terephthalate), and other materials with corrosion resistance to electrolyte solutions, high toughness, and fatigue resistance. A cladding layer can be formed on the outer surface of the case 211, and the cladding layer can be made of various materials, such as but not limited to corrosion-resistant materials such as Ni and Cr.

The battery cell 20 may also be in the form of a soft package, such as a pouch-type soft package. The material of the soft package can be plastic, and examples of the plastic can include polypropylene, polybutylene terephthalate, polybutylene succinate, etc.

Referring to FIG. 4, the electrode assembly 22 comprises a negative electrode plate 222, a separator 223, and a positive electrode plate 221. The battery cell 20 works mainly by relying on the movement of metal ions between the positive electrode plate 221 and the negative electrode plate 222. During the charging and discharging process of the battery, active ions are intercalated and deintercalated back and forth between the positive electrode plate 221 and the negative electrode plate 222. The separator 223 is arranged between the positive electrode plate 221 and the negative electrode plate 222 and mainly serves to prevent a short circuit between the positive and negative electrodes while allowing ions to pass through. The electrode assembly 22 may have either a wound structure or a stacked structure, which is not limited in the embodiments of the present application.

The negative electrode plate 222 comprises a negative electrode current collector and a negative electrode active material layer. The negative electrode active material layer is arranged on at least one side of the negative electrode current collector, and a base coating layer, etc., may be further arranged between the negative electrode current collector and the negative electrode active material layer.

The negative electrode current collector can be made of a metal foil or a composite current collector. For example, the material of the negative current collector can be copper, and the composite current collector can comprise a polymer material substrate layer and a metal layer formed on at least one side of the polymer material substrate material. The composite current collector may be formed by forming a metal material (such as copper, copper alloy, nickel, nickel alloy, titanium, titanium alloy, silver, or silver alloy) on the polymer material substrate material (such as a substrate of polypropylene (PP), polyethylene terephthalate (PET), polybutylene terephthalate (PBT), polystyrene (PS), or polyethylene (PE)).

The negative electrode active material in the negative electrode active material layer can be carbon, silicon, or other negative electrode active materials. By way of example, the negative electrode active material can comprise at least one of the following materials: artificial graphite, natural graphite, soft carbon, hard carbon, a silicon-based material, a tin-based material, lithium titanate, etc. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials. Other traditional materials that can be used as negative electrode active materials may also be used.

In some embodiments, the negative electrode active material layer can further comprise optionally a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further comprises optionally a conductive agent. The conductive agent can be selected from at least one of superconducting carbon, acetylene black, carbon black, Ketjen black, carbon dots, carbon nanotubes, graphene, and carbon nanofibers.

In some embodiments, the negative electrode active material layer further comprises optionally other auxiliaries, e.g., a thickener (such as sodium carboxymethyl cellulose (CMC-Na)).

The separator 223 is arranged between the positive electrode plate 221 and the negative electrode plate 222 and serves the function of isolation. The type of the separator 223 is not particularly limited in the embodiments of the present application, and any well-known separator 223 with a porous structure having good chemical stability and mechanical stability can be selected.

In some embodiments, the material of the separator 223 can be selected from at least one of glass fibers, non-woven fabric, polyethylene, polypropylene, and polyvinylidene fluoride. The separator 223 can be either a single-layer thin film or a multilayer composite thin film without special limitations. When the separator 223 is a multilayer composite thin film, the materials of the layers can be the same or different without special limitations.

The positive electrode plate 221 comprises a positive electrode current collector and a positive electrode active material layer. The positive electrode active material layer is arranged on at least one side of the positive electrode current collector, and a base coating layer, etc., may be further arranged between the positive electrode active material layer and the positive electrode current collector.

The positive electrode current collector can be made of a metal foil or a composite current collector, for example, the material of the positive electrode current collector can be aluminum. The composite current collector can comprise a polymer material substrate layer and a metal layer formed on at least one side of the polymer material substrate material.

The composite current collector may be formed by forming a metal material (such as aluminum, an aluminum alloy, nickel, nickel alloy, titanium, titanium alloy, silver, or silver alloy) on the high molecular material substrate (such as a substrate of polypropylene (PP), polyethylene terephthalate (PET), polybutylene terephthalate (PBT), polystyrene (PS), or polyethylene (PE)).

The positive electrode active material layer comprises a positive electrode active material provided in an embodiment of the present application, or a positive electrode active material prepared by the method for preparing a positive electrode active material, as provided in the embodiment of the present application; in addition, it may further comprise other types of active materials, such as lithium cobalt oxide, lithium iron phosphate, ternary lithium, lithium manganese oxide, and lithium sulfur.

In some embodiments, the positive electrode active material layer may further comprise optionally a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further comprises optionally a conductive agent. By way of example, the conductive agent can include at least one of superconducting carbon, acetylene black, carbon black, Ketjen black, carbon dots, carbon nanotubes, graphene, and carbon nanofibers.

Next, the positive electrode active material and the preparation method therefor as proposed in the embodiments of the present application are described in detail.

In a first aspect, an embodiment of the present application provides a positive electrode active material. The positive electrode active material comprises a lithium-rich manganese-based positive electrode material and a coating layer distributed on at least a portion of the surface of the lithium-rich manganese-based positive electrode material. The lithium-rich manganese-based positive electrode material comprises the element M, and the element M includes one or more of Mg, Nb, Cr, Ce, Fe, Ta, B, Al, V, Ti, Zr, Sn, and Mo. The coating layer comprises at least one of a metal oxide and a metal fluoride. The gram capacity of the positive electrode active material is greater than or equal to 220 mAh/g. The positive electrode active material satisfies at least one of the following conditions (a1) to (d1): (a1) in a refined result of an X-ray diffraction spectrum of the positive electrode active material, the oxygen defect indicator is greater than or equal to 2.12; (b1) the microscopic stress of the positive electrode active material is 0.1-1.5%; (c1) in a Fourier infrared spectrum of the positive electrode active material, the M-O/Mn-O peak intensity ratio is 25-40; and (d1) the specific surface area of the positive electrode active material is 0.9 $m^2$/g to 3.5 $m^2$/g.

By way of example, the battery 100 comprising the positive electrode active material further satisfies a first-cycle efficiency greater than or equal to 84%.

The lithium-rich manganese-based positive electrode material can include a mixture and/or a solid solution consisting of an $Li_2MnO_3$ phase and a lithium nickel cobalt manganese oxide layered structure. The element M refers to, for example, a doping element in the lithium-rich manganese-based material.

The coating layer is distributed on at least a portion of the surface of the lithium-rich manganese-based positive electrode material, that is, the coating layer can either partially coat the surface of the lithium-rich manganese-based positive electrode material, or completely coat the surface of the lithium-rich manganese-based positive electrode material. The coating layer is a structure that coats at least a portion of the surface of the lithium-rich manganese-based positive electrode material. The coating material of the coating layer is, for example, mainly distributed in the form of islands on the surface of the lithium-rich manganese-based positive electrode material. It can be observed that part of the coating material is distributed in the form of small particles on the surface of the body material between the coating layer and the lithium-rich manganese-based positive electrode material. The interface between the two can be determined in a conventional manner, .e.g., by directly observing the material using an electron microscope, illustratively using a transmission electron microscope.

The gram capacity and first-cycle efficiency can be tested by conventional methods. For example, at a voltage of 2.5-4.55 V, the battery is charged to 4.55 V at a rate of 0.1 C, then potentiostatically charged at 4.55 V until the current is less than or equal to 0.05 mA, and left to stand for 2 min, and the charge capacity at this time is denoted as C0; subsequently, the battery is discharged to 2.5 V at a rate of 0.1 C. The discharge capacity at this time is denoted as D0 in gram capacity, and the first-cycle efficiency is namely D0/C0*100%.

X-ray diffraction pattern, also known as X-ray diffraction spectrum, abbreviated as XRD, can be obtained by testing using an X-ray diffractometer using a method well known in the art. By way of example, specific reference can be made to the general rules for XRD testing JIS K 0131-1996, which include the following requirements: (1) sample drying; and (2) sample particle size < 10 $\mu$m. If the sample is a electrode plate scraping powder or a block sample, it needs to be ground and sieved through a 200-mesh sieve. The refined result of the X-ray diffraction pattern is obtained by Rietveld method. The oxygen defect $indicator = \sqrt{(I101/I102)}$, in which I101 and I102 represent the diffraction peak intensity value of the (101) crystal plane and the diffraction peak intensity value of the (102) crystal plane of the lithium-rich manganese-based positive electrode material in the X-ray diffraction pattern, respectively.

By way of example, the above oxygen defect indicator is, for example but not limited to, $\geq 2.2$, $\geq 2.3$, $\geq 2.4$, $\geq 2.5$, $\geq 2.6$, $\geq 2.7$, $\geq 2.8$, $\geq 2.9$, $\geq 3.0$, $\geq 3.1$, etc.

The microscopic stress of the positive electrode active material can be tested by a conventional method. By way of example, the microscopic stress of the positive electrode active material = $(\beta_{hk1}*\cos\theta_{hkl})/(4\sin\theta_{hkl})$, in which $\theta_{hkl}$ is the diffraction angle of the diffraction peak of the (hkl) crystal plane of the lithium-rich manganese-based positive electrode material in the XRD diffraction pattern, and $\beta_{hkl}$ is the full width at half maximum of the diffraction peak of the (hkl) crystal plane of the lithium-rich manganese-based positive electrode material in the XRD diffraction pattern.

By way of example, the microscopic stress of the positive electrode active material is, for example but not limited to, any point value of 0.1%, 0.2%, 0.3%, 0.4%, 0.5%, 0.6%, 0.7%, 0.8%, 0.9%, 1.0%, 1.1%, 1.2%, 1.3%, 1.4%, and 1.5%, or a range of values between any two thereof.

Fourier infrared spectrum refers to Fourier transform infrared spectrum, abbreviated as FTIR, which can be obtained by testing with a Fourier infrared spectrometer using a method well known in the art. By way of example, specific reference can be made to the national standard GB/T6040-2002. The M-O/Mn-O peak intensity ratio refers to the ratio of the peak intensity of an absorption peak corresponding to M-O to the peak intensity of an absorption peak corresponding to Mn-O. The peak intensity of the absorption peak corresponding to M-O refers to the peak intensity of the absorption peak at the peak position corresponding to M-O, and the peak intensity of the absorption peak corresponding to Mn-O refers to the peak intensity of the absorption peak at the peak position corresponding to Mn-O.

By way of example, the M-O/Mn-O peak intensity ratio is, for example but not limited to, any point value of 25, 26, 27, 28, 29, 30, 31, 32, 33, 34, 35, 36, 37, 38, 39, and 40, or a range of values between any two thereof.

The specific surface area (BET) refers to the total surface area per unit mass of the material. The specific surface area of the positive electrode active material can be obtained by testing using a conventional method, and by way of example, reference can be made to the national standard GB/T 19587-2004.

By way of example, the specific surface area of the positive electrode active material is, for example but not limited to, any point value of 0.9 $m^2$/g, 1 $m^2$/g, 1.1 $m^2$/g, 1.2 $m^2$/g, 1.3 $m^2$/g, 1.4 $m^2$/g, 1.5 $m^2$/g, 1.6 $m^2$/g, 1.7 $m^2$/g, 1.8 $m^2$/g, 1.9 $m^2$/g, 2 $m^2$/g, 2.1 $m^2$/g, 2.2 $m^2$/g, 2.3 $m^2$/g, 2.4 $m^2$/g, 2.5 $m^2$/g, 2.6 $m^2$/g, 2.7 $m^2$/g, 2.8 $m^2$/g, 2.9 $m^2$/g, 3 $m^2$/g, 3.1 $m^2$/g, 3.2 $m^2$/g, 3.3 $m^2$/g, 3.4 $m^2$/g, and 3.5 $m^2$/g, or any range between any two thereof.

The positive electrode active material provided in the embodiment of the present application has a relatively high gram capacity; moreover, at least one of the oxygen defect indicator, microscopic stress, M-O/Mn-O peak intensity ratio, and specific surface area meets a specific range, so that the positive electrode active material has relatively good storage performance and cycling stability.

In some embodiments, the positive electrode active material satisfies at least one of the following conditions (a2) to (d2): (a2) in a refined result of an X-ray diffraction spectrum of the positive electrode active material, the oxygen defect indicator is greater than or equal to 2.72; (b2) the microscopic stress of the positive electrode active material is 0.1-0.8%; (c2) in a Fourier infrared spectrum of the positive electrode active material, the M-O/Mn-O peak intensity ratio is 30-40; and (d2) the specific surface area of the positive electrode active material is 1.5 $m^2$/g to 2.5 $m^2$/g.

In these embodiments, at least one of the oxygen defect indicator, microscopic stress, M-O/Mn-O peak intensity ratio, and specific surface area of the positive electrode active material meets a further range, which is conducive to the positive electrode active material having a better storage performance and cycling stability.

In some embodiments, the elemental composition of the coating layer comprises one or more of the element Al, the element Ce, and the element Co, and one or more of the element Zr, the element B, and the element Ti.

In the coating layer, the metal oxide and the metal fluoride refer to the composition forms of the compounds therein, and the elemental composition refers to the elemental composition of the compounds in the coating layer. For example, the metal oxide and/or metal fluoride can include one or more of the element Al, the element Ce, and the element Co.

In these embodiments, the coating formed by the coating raw materials corresponding to the element Al, the element Ce, and the element Co can better protect the lithium-rich manganese-based positive electrode material during pickling, and the coating formed by the coating raw materials corresponding to the element Zr, the element B, and the element Ti can better modify the lithium-rich manganese-based positive electrode material after pickling, so that the coating layer can better improve the cycling stability of the positive electrode active material; moreover, the element B can activate a lithium-containing rock salt phase on the surface of the material, which is beneficial to increasing the gram capacity.

In some embodiments, in the coating layer, the ratio of the total mass of the element Al and the element Ce to the total mass of the element Zr and the element B is 1:(0.5-2).

The masses of the element Al, the element Ce, the element Zr, and the element B can be obtained by testing using a conventional method. By way of example, the test is performed with reference to EPA6010d-2014 Inductively Coupled Plasma - Atomic Emission Spectrometry.

By way of example, the ratio of the total mass of the element Al and the element Ce to the total mass of the element Zr and the element B is, for example but not limited to, 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2, etc.

In these embodiments, the elements in the coating layer meet a specific ratio, and the coating layer can better improve the cycling stability of the positive electrode active material.

In some embodiments, in the positive electrode active material, the total content of the element Al, the element Ce, the element Co, the element Zr, the element B, and the element Ti in the coating layer is less than or equal to 5000 ppm.

The total content of the element Al, the element Ce, the element Co, the element Zr, the element B, and the element Ti in the coating layer can be obtained by testing using a conventional method. By way of example, the test is performed with reference to EPA6010d-2014 Inductively Coupled Plasma - Atomic Emission Spectrometry.

By way of example, the total content of the element Al, the element Ce, the element Co, the element Zr, the element B, and the element Ti in the coating layer is, for example but not limited to, any point value of 1000 ppm, 2000 ppm, 3000 ppm, 4000 ppm, and 5000 ppm, or a range value between any two thereof.

In these embodiments, the content of the element components in the coating layer is lower than a specific range such that while the coating layer effectively improves the cycling stability of the positive electrode active material, the positive electrode active material has a relatively good gram capacity and is beneficial to improving the first-cycle efficiency of the battery 100.

In some embodiments, the coating layer comprises one or more of aluminum fluoride, aluminum oxide, cerium fluoride, and cerium oxide, and one or more of zirconium oxide, zirconium fluoride, boric acid, and zirconium boride.

In these embodiments, aluminum fluoride, aluminum oxide, cerium fluoride, and cerium oxide have relatively high sintering temperature resistance, can coat the surface of the lithium-rich manganese-based positive electrode material in the form of a dense coating through a high sintering temperature, and can better protect the lithium-rich manganese-based positive electrode material during pickling, which is beneficial to improving the cycling stability. Zirconium oxide, zirconium fluoride, boric acid, and zirconium boride can better modify the surface of the lithium-rich manganese-based positive electrode material, which is beneficial to improving the cycling stability, and can coat the surface of the lithium-rich manganese-based positive electrode material at a relatively low sintering temperature, which is beneficial to improving the gram capacity of the positive electrode active material and the first-cycle efficiency of the battery 100.

In some embodiments, the ratio of the volume average particle size Dv50 of the lithium-rich manganese-based positive electrode material to the thickness of the coating layer is (5.5-6.5):(0.2-0.8).

The volume average particle size Dv50 refers to the particle size corresponding to 50% in the volume distribution, which can be obtained by testing using a conventional method. By way of example, the test is performed by using the device Malvern 3000 with reference to the national standard GB/T 19077-2016/ISO13320:2009 Particle size analysis - Laser diffraction methods.

The thickness of the coating layer refers to the value of the wall thickness from the inner surface to the outer surface of the coating layer. The distance from the inner surface to the outer surface can be measured at a plurality of positions in an electron microscope image of a cross section of the positive electrode active material and an average value is taken.

The testing method for the volume average particle size Dv50 of the lithium-rich manganese-based positive electrode material is illustratively as follows: the volume average particle size Dv50 of the positive electrode active material is measured by the Particle size analysis - Laser diffraction methods, and the volume average particle size Dv50 of the lithium-rich manganese-based positive electrode material is obtained by subtracting twice the thickness of the coating layer from the volume average particle size Dv50 of the positive electrode active material.

By way of example, the ratio of the volume average particle size Dv50 of the lithium-rich manganese-based positive electrode material to the thickness of the coating layer is 5.5:(0.2-0.8), 6:(0.2-0.8), 6.5:(0.2-0.8), etc.

In these embodiments, the lithium-rich manganese-based positive electrode material and the coating layer meet an appropriate size ratio, such that while the coating layer effectively improves the cycling stability of the positive electrode active material, the positive electrode active material has a relatively good gram capacity and is beneficial to improving the first-cycle efficiency of the battery 100.

In some embodiments, the thickness of the coating layer is 0.2-0.8 $\mu$m.

By way of example, the thickness of the coating layer is, for example but not limited to, any point value of 0.2 $\mu$m, 0.3 $\mu$m, 0.4 $\mu$m, 0.5 $\mu$m, 0.6 $\mu$m, 0.7 $\mu$m, and 0.8 $\mu$m, or a range of values between any two thereof.

In these embodiments, the coating layer has a suitable thickness, which can better play a protective role and improve the cycling stability. Compared with a coating layer with an excessively large thickness, it is also beneficial to increasing the gram capacity of the positive electrode active material and the first-cycle efficiency of the battery 100.

In some embodiments, the lithium-rich manganese-based positive electrode material comprises $Li[Li_xNi_aCo_bMn_cM_a]O_{2-e}$, where $x + a + b + c + d = 1$, $x > 0$, $a > 0$, $0 < b < 0.1$, $c > 0$, $d \geq 0$, and $0 \leq e \leq 0.2$.

In the lithium-rich manganese-based positive electrode material, the chemical formula $Li[Li_xNi_aCo_bMn_cM_d]O_{2-e}$ can be determined by a conventional method. By way of example, it can be determined by ICP emission spectroscopy (inductively coupled plasma emission spectrometer).

It needs be noted that in the positive electrode plate 221, the battery cell 20, and the electrical device, due to the loss of the element oxygen in the positive electrode active material after cycling and other processes, the measured content of the element oxygen in the positive electrode active material may decrease.

In these embodiments, the lithium-rich manganese-based positive electrode material has a relatively low cobalt content, which can reduce the cost.

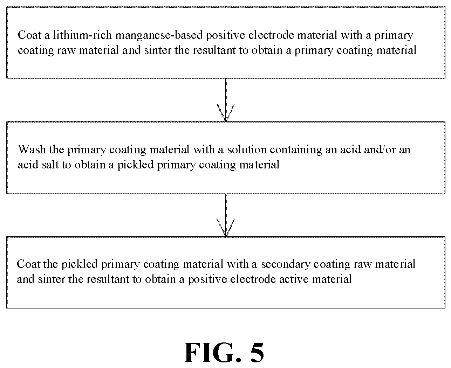

Referring to FIG. 5, in a second aspect, an embodiment of the present application provides a method for preparing a positive electrode active material, comprising coating a lithium-rich manganese-based positive electrode material with a primary coating raw material and sintering the resultant to obtain a primary coating material; washing the primary coating material with a solution containing an acid and/or an acid salt to obtain a pickled primary coating material; and coating the pickled primary coating material with a secondary coating raw material and sintering the resultant to obtain the positive electrode active material. The primary coating raw material includes one or more of a metal oxide and a metal fluoride; and the secondary coating raw material includes one or more of a metal oxide, a metal fluoride, and a boride.

The method for preparing a positive electrode active material, as provided in the embodiment of the present application, is illustratively used for preparing the positive electrode active material as provided in the embodiment of the first aspect.

In terms of the selection of raw materials, the size, elemental composition, usage ratio, etc. of the lithium-rich manganese-based positive electrode material, the primary coating raw material, and the secondary coating raw material can all be selected accordingly with reference to the positive electrode active material provided in the embodiment of the first aspect. Illustratively, the lithium-rich manganese-based positive electrode material comprises the element M, and the element M includes one or more of Mg, Nb, Cr, Ce, Fe, Ta, B, Al, V, Ti, Zr, Sn, and Mo.

In terms of the performance of the prepared product, by way of example, the gram capacity of the positive electrode active material is $\geq$ 220 mAh/g. In addition, the positive electrode active material satisfies at least one of the following conditions (a1) to (d1): (a1) in a refined result of an X-ray diffraction spectrum of the positive electrode active material, the oxygen defect indicator is greater than or equal to 2.12; (b1) the microscopic stress of the positive electrode active material is 0.1-1.5%; (c1) in a Fourier infrared spectrum of the positive electrode active material, the M-O/Mn-O peak intensity ratio is 25-40; and (d1) the specific surface area of the positive electrode active material is 0.9 $m^2$/g to 3.5 $m^2$/g. In addition, illustratively, the battery 100 comprising the positive electrode active material further satisfies a first-cycle efficiency greater than or equal to 84%.

It needs be noted that the description of "primary" and "secondary" in the primary coating raw material and the secondary coating raw material does not refer to which pass this round of coating belongs to, nor do they refer to how many times this round of coating is repeated. The terms are only used for distinguishing between different passes of coating.

In the method for preparing a positive electrode active material, as provided by the embodiment of the present application, the gram capacity is increased by pickling; coating with a specific type of primary coating raw material before pickling can protect the lithium-rich manganese-based positive electrode material during pickling and improve gas production; and coating with a specific type of secondary coating raw material after pickling can modify the surface of the lithium-rich manganese-based positive electrode material after pickling. In the preparation method, the lithium-rich manganese-based positive electrode material is specifically coated respectively before and after pickling to form a positive electrode active material that meets a specific microscopic indicator range. The specific microscopic indicator includes at least one of oxygen defect indicator, microscopic stress, M-O/Mn-O peak intensity ratio, and specific surface area. The element M is an optional doping element for the lithium-rich manganese-based positive electrode material, so that the positive electrode active material has a relatively good storage performance and cycling stability.

In some embodiments, during the coating of the lithium-rich manganese-based positive electrode material with the primary coating raw material and the sintering of the resultant, the sintering temperature is 500-750°C; and optionally, the sintering time is 6-12 h.

By way of example, the sintering temperature after coating with the primary coating raw material is, for example but not limited to, any point value of 500°C, 550°C, 600°C, 650°C, 700°C, and 750°C, or a range of values between any two thereof.

By way of example, the sintering time after coating with the primary coating raw material is, for example but not limited to, any point value of 6 h, 7 h, 8 h, 9 h, 10 h, 11 h, and 12 h, or a range of values between any two thereof.

In these embodiments, after coating with the primary coating raw material, a relatively high specific sintering temperature is selected, which is beneficial to better melting the primary coating raw material and thus makes it firmly coated on the surface of the lithium-rich manganese-based positive electrode material, thereby facilitating better protection of the lithium-rich manganese-based positive electrode material during pickling. Optionally, selecting a suitable sintering time is beneficial to balancing efficiency and sintering effect.

In some embodiments, the primary coating raw material includes one or more of the element Al, the element Ce, and the element Co; and optionally, the primary coating raw material includes one or more of aluminum fluoride, aluminum oxide, cerium fluoride, and cerium oxide.

In these embodiments, the primary coating raw material has a specific composition, and can form a dense coating on the surface of the lithium-rich manganese-based positive electrode material after sintering, thereby enabling better protection of the lithium-rich manganese-based positive electrode material and facilitating the improvement of the cycling stability.

In some embodiments, during the coating of the pickled primary coating material with a secondary coating raw material and the sintering of the resultant, the sintering temperature is 350-550°C; optionally, the sintering time is 6-12 h.

By way of example, the sintering temperature after coating with the secondary coating raw material is, for example but not limited to, any point value of 350°C, 400°C, 450°C, 500°C, and 550°C, or a range of values between any two thereof.

By way of example, the sintering time after coating with the secondary coating raw material is, for example but not limited to, any point value of 6 h, 7 h, 8 h, 9 h, 10 h, 11 h, and 12 h, or a range of values between any two thereof.

In these embodiments, after coating with the secondary coating raw material, a relatively low specific sintering temperature is selected, which can better melt the secondary coating raw material, thereby better modifying the surface of the lithium-rich manganese-based positive electrode material; and compared with an excessively high sintering temperature, it can also improve the conversion of the surface defect spinel structure into a rock salt phase, which is beneficial to improving the gram capacity of the positive electrode active material and the first-cycle efficiency of the battery 100. Optionally, selecting a suitable sintering time is beneficial to balancing efficiency and sintering effect.

In some embodiments, the secondary coating raw material includes one or more of the element Zr, the element B, and the element Ti; and optionally, the secondary coating raw material includes one or more of zirconium oxide, zirconium fluoride, boric acid, and zirconium boride.

In these embodiments, the secondary coating raw material has a specific composition, so that the surface of the lithium-rich manganese-based positive electrode material can be can better modified, which is beneficial to improving the cycling stability; in addition, it can coat the surface of the lithium-rich manganese-based positive electrode material at a relatively low sintering temperature, which is beneficial to improving the gram capacity of the positive electrode active material and the first-cycle efficiency of the battery 100.

In some embodiments, the primary coating raw material includes one or more of aluminum fluoride, aluminum oxide, cerium fluoride, and cerium oxide, the secondary coating raw material includes one or more of zirconium oxide, zirconium fluoride, boric acid, and zirconium boride, and the ratio of the total mass of the element Al and the element Ce in the primary coating raw material to the total mass of the element Zr and the element B in the secondary coating raw material is 1:(0.5-2).

For the illustrative selection of the ratio of the total mass of the element Al and the element Ce in the primary coating raw material to the total mass of the element Zr and the element B in the secondary coating raw material, reference can be made to the relevant explanation of the embodiment of the first aspect.

In these embodiments, the compositions of the primary coating raw material and the secondary coating raw material meet specific ratios, so that the coating layer can better improve the cycling stability of the positive electrode active material.

In some embodiments, the primary coating raw material includes one or more of the element Al, the element Ce, and the element Co, the secondary coating raw material includes one or more of the element Zr, the element B, and the element Ti, and the primary coating raw material and the secondary coating raw material form a coating layer distributed on at least a portion of the surface of the lithium-rich manganese-based positive electrode material; and in the positive electrode active material, the total content of the element Al, the element Ce, the element Co, the element Zr, the element B, and the element Ti in the coating layer is less than or equal to 5000 ppm.

For the illustrative selection of the total content of the element Al, the element Ce, the element Co, the element Zr, the element B, and the element Ti in the coating layer, reference can be made to the relevant explanation of the embodiment of the first aspect.

In these embodiments, the content of the element components in the coating layer is lower than a specific range such that while the coating layer effectively improves the cycling stability of the positive electrode active material, the positive electrode active material has a relatively good gram capacity and is beneficial to improving the first-cycle efficiency of the battery 100.

In some embodiments, the primary coating raw material and the secondary coating raw material form a coating layer distributed on at least a portion of the surface of the lithium-rich manganese-based positive electrode material, and the thickness of the coating layer is 0.2-0.8 $\mu$m.

For the illustrative selection of the total content of the thickness of the coating layer, reference can be made to the relevant explanation of the embodiment of the first aspect.

In these embodiments, the coating layer has a suitable thickness, which can better play a protective role and improve the cycling stability. Compared with a coating layer with an excessively large thickness, it is also beneficial to increasing the gram capacity of the positive electrode active material and the first-cycle efficiency of the battery 100.

In some embodiments, the lithium-rich manganese-based positive electrode material comprises $Li[Li_xNi_aCo_bMn_cM_a]O_{2-e}$, where $x + a + b + c + d = 1$, $x > 0$, $a > 0$, $0 < b < 0.1$, $c > 0$, $d \geq 0$, and $0 \leq e \leq 0.2$, and the element M includes one or more of Mg, Nb, Cr, Ce, Fe, Ta, B, Al, V, Ti, Zr, Sn, and Mo.

By way of example, the lithium-rich manganese-based positive electrode material is prepared by the following method.

A low-cobalt hydroxide precursor, a lithium salt, and ball mill zirconium beads are placed in a drum ball mill mixer and mixed at a ball-to-material ratio of 25-80. The Li/Me molar ratio is controlled to be 1.3-1.4, and Me includes nickel, cobalt, manganese, and the modifying element M. The mixed material is placed in a muffle furnace for sintering to obtain a lithium-rich manganese-based positive electrode material intermediate product after primary sintering, where the sintering temperature is 780-900°C, the heating rate is 2-5°C/min, the sintering time is 10-15 h, and the sintering atmosphere is air. The intermediate product is mechanically ground and subjected to a shaking sieve treatment to obtain the lithium-rich manganese-based positive electrode material.

Optionally, the lithium salt includes one or more of lithium hydroxide, lithium carbonate, lithium acetate, lithium nitrate, lithium oxalate, and lithium sulfate.

In these embodiments, the lithium-rich manganese-based positive electrode material has a relatively low cobalt content, which can reduce the cost, and the lithium-rich manganese-based positive electrode material has a specific doping element M, which is beneficial to improving the gram capacity of the positive electrode active material and the first-cycle efficiency of the battery 100.

In some embodiments, during the washing of the primary coating material with the solution containing the acid and/or the acid salt, the solution containing the acid and/or the acid salt comprises an organic acid and/or an organic acid salt, the pH value of the solution containing the acid and/or the acid salt is 2-8, and the washing time is 0.25-4 h; optionally, the solution containing the acid and/or the acid salt comprises one or more of citric acid, ammonium citrate, and diammonium hydrogen citrate.

In the description of the present application, pickling is namely an abbreviation for the process of washing the primary coating material with a solution containing an acid and/or an acid salt. It needs be noted that in the embodiments of the present application, since the deionized water solvent commonly used in the organic acid and/or a salt solution thereof is weakly alkaline, so the initial pH value of the solution containing the acid and/or the acid salt can be greater than 7.

The acid salt refers to a salt in which an anion is an acid radical ion.

By way of example, the pH value of the solution containing the acid and/or the acid salt is, for example but not limited to, any point value of 2, 3, 4, 5, 6, 7, and 8, or a range of values between any two thereof.

Optionally, the acid and/or acid salt includes one or more of citric acid, ammonium citrate, and diammonium hydrogen citrate.

By way of example, the washing time value is, for example but not limited to, any point value of 0.25 h, 0.5 h, 1 h, 1.5 h, 2 h, 2.5 h, 3 h, 3.5 h, and 4 h, or a range of values between any two thereof.

The washing process can be accompanied by stirring operation, and the stirring rate can be optionally 800-1200 r/min, for example but not limited to 800 r/min, 900 r/min, 1000 r/min, 1100 r/min, 1200 r/min, etc.

In these embodiments, pickling is performed under specific pH value and washing time conditions, so that the gram capacity of the positive electrode active material and the first-cycle efficiency of the battery 100 can be better improved.

In a third aspect, an embodiment of the present application provides a positive electrode plate, comprising the positive electrode active material as described in the above embodiment, or a positive electrode active material prepared by the method for preparing a positive electrode active material as described in the above embodiment.

In a fourth aspect, an embodiment of the present application provides a battery, comprising the positive electrode plate according to the above embodiment.

In a fifth aspect, an embodiment of the present application further provides an electrical device, comprising the battery according to the above embodiment.

Some specific embodiments are listed below to better illustrate the present application.

I. Preparation of battery cell

(1) Preparation of negative electrode material

S1. A low-cobalt hydroxide precursor, a lithium salt, and ball mill zirconium beads were placed in a drum ball mill mixer and mixed at a ball-to-material ratio of 60. The Li/Me molar ratio was controlled to be 1.35, and Me included nickel, cobalt, manganese, and the modifying element M. The mixed material was placed in a muffle furnace for sintering to obtain a lithium-rich manganese-based positive electrode material intermediate product after primary sintering, where the sintering temperature was 800°C, the heating rate was 2°C/min, the sintering time was 10 h, and the sintering atmosphere was air. The intermediate product was mechanically ground and subjected to a shaking sieve treatment to obtain the lithium-rich manganese-based positive electrode material.

The chemical formula of the obtained lithium-rich manganese-based positive electrode material was

$Li_{1.15}Ni_{0.25}C_{00.05}Ti_{0.02}Mn_{0.53}O_2$. Dv50 was 6.5 $\mu$m, and SPAN = 1.15. SPAN represented the size span, and SPAN = (Dv90-Dv10)/Dv50.

S2. The lithium-rich manganese-based positive electrode material and a certain coating amount of primary coating raw material were put to a drum ball mill mixer, mixed for 10 h, and then put into a muffle furnace for sintering, where the heating rate is 2-5°C/min, the sintering temperature and sintering time were as shown in Table 1, and the sintering atmosphere was air. The sintered material was mechanically ground and subjected to a shaking sieve treatment to obtain a primary coating material.

S3. Citric acid was dissolved in deionized water to prepare a citric acid solution. The concentration of citric acid in the solution was 3 g/L, and the pH value of the solution was 2.57. Subsequently, the primary coating material in step S1 was weighed at a liquid-to-solid ratio of 25:1 and added to the citric acid solution for washing. The treatment time was 0.5 h, and the stirring rate was 900 r/min. After washing, the primary coating material was suction-filtered, rinsed with deionized water, and suction-filtered, and then dried at 80°C for 10 h. After mechanical grinding and a shaking sieve treatment, a pickled primary coating material.

S4. The pickled primary coating material obtained in step S3 and a certain coating amount of secondary coating raw material were put to a drum ball mill mixer, mixed for 10 h, and then put into a muffle furnace for sintering, where the heating rate is 2°C/min, the sintering temperature and sintering time were as shown in Table 1, and the sintering atmosphere was air. The sintered material was mechanically ground and subjected to a shaking sieve treatment to obtain a positive electrode active material.

(2) Preparation of positive electrode plate

The positive electrode active material prepared as above was put into a 5 L stirring tank for premixing for 30 minutes, and the conductive agent acetylene black (SP) and the binder polyvinylidene fluoride (PVDF) were then added for secondary dry mixing for 30 minutes. The mass ratio of the positive electrode active material to the conductive agent to the binder was 96:2:2. The solvent N-methylpyrrolidone (NMP) was added and rapidly stirred under vacuum conditions to form a positive electrode slurry with a solid content of 70 wt%. The positive electrode slurry was evenly applied to both sides of an aluminum foil with a thickness of 12 $\mu$m. The coated electrode plate was dried in an oven at 100-130°C for half an hour and then taken out to obtain the positive electrode plate. The loading amount of the positive electrode active material of the positive electrode plate was 21.5 mg/cm$^2$.

(3) Preparation of negative electrode plate

The negative electrode active material artificial graphite, hard carbon, the conductive agent acetylene black, the binder styrene butadiene rubber (SBR), and the thickener sodium carboxymethyl cellulose (CMC) were prepared in a mass ratio of 90:5:2:2:1 and dissolved in a deionized water solvent system and fully stirred until uniformly mixed to obtain a negative electrode slurry. The negative electrode slurry was applied to a copper foil, dried, and cold pressed to obtain the negative electrode plate.

(4) Battery assembly

A polyethylene porous polymer thin film was used as a separator. The positive electrode plate, the separator, and the negative electrode plate were sequentially stacked, such that the separator was positioned between the positive electrode plate and the negative electrode plate to achieve an isolation effect, the stack was wound and then placed in an outer package, and a prepared basic electrolyte solution was injected to obtain a battery cell. The basic electrolyte solution was 1 mol/L $LiPF_6$/(EC+EMC+DMC), and the volume ratio of EC to EMC to DMC in the solvent was 1:1:1.

It can be understood by those skilled in the art that in the above methods of the specific examples and comparative examples, the drafting order of various steps does not indicate a strict performing order to constitute any limitation on the implementation process. The specific order of performing the various steps should be determined by the functions thereof and the possible internal logic.

II. Testing method

(1) Gram capacity and first-cycle efficiency test

A button battery was used as a test object. At a voltage of 2.5-4.55 V, the button battery was charged to 4.55 V at a rate of 0.1 C, then potentiostatically charged at 4.55 V until the current was less than or equal to 0.05 mA, and left to stand for 2 min, and the charge capacity at this time was denoted as C0; subsequently, the button battery was discharged to 2.5 V at a rate of 0.1 C. The discharge capacity at this time was denoted as D0 in gram capacity, and the first-cycle efficiency was namely D0/C0*100%.

(2) oxygen defect indicator test

Test conditions for X-ray diffraction pattern: Reference can be made to the general rules for XRD testing JIS K 0131-1996, which included the following requirements: (1) sample drying; and (2) sample particle size < 10 $\mu$m. If the sample was a electrode plate scraping powder or a block sample, it needed to be ground and sieved through a 200-mesh sieve.

The refined result of the X-ray diffraction pattern was obtained by Rietveld method. The oxygen defect $indicator = \sqrt{(I101/I102)}$, in which I101 and I102 represented the diffraction peak intensity value of the (101) crystal plane and the diffraction peak intensity value of the (102) crystal plane of the lithium-rich manganese-based positive electrode material in the X-ray diffraction pattern, respectively.

(3) Microscopic stress test

An X-ray diffraction pattern test was carried out. For the conditions: reference can be made to the general rules for XRD testing JIS K 0131-1996, which include the following requirements: (1) sample drying; and (2) sample particle size < 10 $\mu$m. If the sample was a electrode plate scraping powder or a block sample, it needed to be ground and sieved through a 200-mesh sieve.

The microscopic stress of the positive electrode active material = $(\beta_{hkl}*\cos\theta_{hkl})/(4\sin\theta_{hkl})$, in which $\theta_{hkl}$ was the diffraction angle of the diffraction peak of the (hkl) crystal plane of the lithium-rich manganese-based positive electrode material in the XRD diffraction pattern, and $\beta_{hkl}$ was the full width at half maximum of the diffraction peak of the (hkl) crystal plane of the lithium-rich manganese-based positive electrode material in the XRD diffraction pattern.

(4) M-O/Mn-O peak intensity ratio test

Specific reference can be made to the national standard GB/T 6040-2002.

The method for confirming the M-O peak intensity was as follows: the element M was Ti, and the diffraction peak intensity at 900 cm$^{-1}$ to 1000 cm$^{-1}$ in the Fourier infrared spectrum was taken.

The method for confirming the Mn-O peak intensity was as follows: the diffraction peak intensity at 600 cm$^{-1}$ to 620 cm$^{-1}$ in the Fourier infrared spectrum was taken.

(5) Specific surface area test

Specific reference can be made to the national standard GB/T 19587-2004.

1) Pretreatment: A specialized sample tube was used to take an appropriate amount of sample, heated, and evacuated to a vacuum for degassing for 2 h, the total weight was weighed after cooling to room temperature, and the mass of the sample tube was subtracted to obtain the mass of the sample.

2) Test: The sample tube was loaded onto a work station. The adsorption amount of a gas on the surface of a solid under different adsorption pressures was determined at a constant low temperature, and the adsorption amount for a mono-molecular layer of the sample was derived based on a BET multilayer adsorption theory and an equation thereof, and then, the specific surface area per unit mass of the solid sample was calculated.

3) Adsorption gas: nitrogen; adsorption pressure points: 0.05, 0.10, 0.15, 0.20, 0.25, and 0.30; test atmosphere: high-purity liquid nitrogen atmosphere.

(6) Cycling performance test

A full battery was taken as a test object. In a constant temperature environment at 25°C, at a voltage of 2.5-4.45 V, the full battery was charged to 4.45 V at a rate of 1 C, then potentiostatically charged at 4.45 V until the current was less than or equal to 0.05 mA, left to stand for 5 minutes, and then discharged to 2.5 V at a rate of 1 C, and the discharge capacity was recorded. The previous process was repeated to obtain the capacity retention rate after a specified number of cycles. The capacity retention rate = first-cycle discharge capacity / discharge capacity at a specified cycle number $\times$ 100%.

III. Experimental conditions and test results

In the preparation method corresponding to each experimental group, the main experimental conditions were as shown in Table 1, the parameters of the prepared positive electrode active materials were as shown in Table 2, and the battery performance test results after the positive electrode active materials were applied to batteries were as shown in Table 3.

Table 1

| Item | Type of primary coating material | Sintering temperature after primary coating (°C) | Sintering time after primary coating (h) | Type of secondary coating material | Sintering temperature after secondary coating (°C) | Sintering time after secondary coating (h) | Contents of the elements Al, Ce, Zr, and B in positive electrode active material (ppm) | Thickness of coating layer (μm) | Total mass of the elements Al and Ce : Total mass of the elements Zr and B |
|---|---|---|---|---|---|---|---|---|---|
| Example 1 | $Al_2O_3$ | 600 | 10 | $ZrF_4$ | 450 | 10 | 4000 | 0.5 | 1:1 |
| Example 2 | $Al_2O_3$ | 500 | 10 | $ZrF_4$ | 450 | 10 | 4000 | 0.5 | 1:1 |
| Example 3 | $Al_2O_3$ | 550 | 10 | $ZrF_4$ | 450 | 10 | 4000 | 0.5 | 1:1 |
| Example 4 | $Al_2O_3$ | 750 | 10 | $ZrF_4$ | 450 | 10 | 4000 | 0.5 | 1:1 |
| Example 5 | $Al_2O_3$ | 800 | 10 | $ZrF_4$ | 450 | 10 | 4000 | 0.5 | 1:1 |
| Example 6 | $Al_2O_3$ | 600 | 6 | $ZrF_4$ | 450 | 10 | 4000 | 0.5 | 1:1 |
| Example 7 | $Al_2O_3$ | 600 | 8 | $ZrF_4$ | 450 | 10 | 4000 | 0.5 | 1:1 |
| Example 8 | $Al_2O_3$ | 600 | 12 | $ZrF_4$ | 450 | 10 | 4000 | 0.5 | 1:1 |
| Example 9 | $Al_2O_3$ | 600 | 15 | $ZrF_4$ | 450 | 10 | 4000 | 0.5 | 1:1 |
| Example 10 | $Al_2O_3$ | 600 | 10 | $ZrF_4$ | 350 | 10 | 4000 | 0.5 | 1:1 |
| Example 11 | $Al_2O_3$ | 600 | 10 | $ZrF_4$ | 400 | 10 | 4000 | 0.5 | 1:1 |
| Example 12 | $Al_2O_3$ | 600 | 10 | $ZrF_4$ | 550 | 10 | 4000 | 0.5 | 1:1 |
| Example 13 | $Al_2O_3$ | 600 | 10 | $ZrF_4$ | 600 | 10 | 4000 | 0.5 | 1:1 |
| Example 14 | $Al_2O_3$ | 600 | 10 | $ZrF_4$ | 450 | 6 | 4000 | 0.5 | 1:1 |
| Example 15 | $Al_2O_3$ | 600 | 10 | $ZrF_4$ | 450 | 8 | 4000 | 0.5 | 1:1 |
| Example 16 | $Al_2O_3$ | 600 | 10 | $ZrF_4$ | 450 | 12 | 4000 | 0.5 | 1:1 |
| Example 17 | $Al_2O_3$ | 600 | 10 | $ZrF_4$ | 450 | 15 | 4000 | 0.5 | 1:1 |
| Example 18 | $AlF_3$ | 600 | 10 | $ZrF_4$ | 450 | 10 | 4000 | 0.5 | 1:1 |
| Example 19 | $CeF_3$ | 600 | 10 | $ZrF_4$ | 450 | 10 | 4000 | 0.5 | 1:1 |
| Example 20 | $CeO_2$ | 600 | 10 | $ZrF_4$ | 450 | 10 | 4000 | 0.5 | 1:1 |
| Example 21 | $Al_2O_3$ | 600 | 10 | $ZrO_2$ | 450 | 10 | 4000 | 0.5 | 1:1 |
| Example 22 | $Al_2O_3$ | 600 | 10 | $H_3BO_3$ | 450 | 10 | 4000 | 0.5 | 1:1 |
| Example 23 | $Al_2O_3$ | 600 | 10 | $ZrB_2$ | 450 | 10 | 4000 | 0.5 | 1:1 |

| Item | Type of primary coating material | Sintering temperature after primary coating (°C) | Sintering time after primary coating (h) | Type of secondary coating material | Sintering temperature after secondary coating (°C) | Sintering time after secondary coating (h) | Contents of the elements Al, Ce, Zr, and B in positive electrode active material (ppm) | Thickness of coating layer ($\mu$m) | Total mass of the elements Al and Ce : Total mass of the elements Zr and B |
|---|---|---|---|---|---|---|---|---|---|
| Example 24 | $Al_2O_3$ | 600 | 10 | $ZrF_4$ | 450 | 10 | 2000 | 0.3 | 1:1 |
| Example 25 | $Al_2O_3$ | 600 | 10 | $ZrF_4$ | 450 | 10 | 5000 | 0.6 | 1:1 |
| Example 26 | $Al_2O_3$ | 600 | 10 | $ZrF_4$ | 450 | 10 | 6000 | 0.8 | 1:1 |
| Example 27 | $Al_2O_3$ | 600 | 10 | $ZrF_4$ | 450 | 10 | 4000 | 0.5 | 1:0.3 |
| Example 28 | $Al_2O_3$ | 600 | 10 | $ZrF_4$ | 450 | 10 | 4000 | 0.5 | 1:0.5 |
| Example 29 | $Al_2O_3$ | 600 | 10 | $ZrF_4$ | 450 | 10 | 4000 | 0.5 | 1:2 |
| Example 30 | $Al_2O_3$ | 600 | 10 | $ZrF_4$ | 450 | 10 | 4000 | 0.5 | 1:2.5 |
| Example 31 | / | / | / | $ZrF_4$ | 450 | 10 | 4000 | 0.5 | / |
| Example 32 | / | / | / | $ZrF_4$ | 450 | 10 | 2000 | 0.3 | / |
| Example 33 | $Al_2O_3$ | 600 | 10 | / | / | / | 4000 | 0.5 | / |
| Example 34 | $Al_2O_3$ | 600 | 10 | / | / | / | 2000 | 0.3 | / |
| Comparative Example 1 | / | / | / | / | / | / | / | / | / |

In Table 1, Examples 31 and 32 indicate that no primary coating raw material was used for coating, Examples 33 and 34 indicate that no secondary coating raw material was used for coating, and Comparative Example 1 indicates that no primary coating raw material was used for coating and no secondary coating raw material was used for coating.

Table 2

| Item | oxygen defect indicator | Microscopic stress (%) | M-O/Mn-O peak intensity | Specific surface area (m²/g) |
|---|---|---|---|---|
| Example 1 | 3.12 | 0.18 | 37.2 | 1.92 |
| Example 2 | 2.96 | 0.58 | 35.4 | 1.96 |
| Example 3 | 3.01 | 0.39 | 36.1 | 1.93 |
| Example 4 | 2.92 | 0.68 | 35.8 | 1.89 |
| Example 5 | 2.74 | 0.93 | 35.3 | 1.72 |
| Example 6 | 2.84 | 0.42 | 32.1 | 2.01 |
| Example 7 | 2.92 | 0.36 | 31.8 | 1.98 |
| Example 8 | 2.72 | 0.67 | 34.6 | 1.83 |
| Example 9 | 2.54 | 0.89 | 33.4 | 1.77 |
| Example 10 | 2.82 | 0.51 | 32.1 | 2.06 |
| Example 11 | 3.04 | 0.36 | 34.7 | 2.02 |
| Example 12 | 2.94 | 0.75 | 35.3 | 1.87 |
| Example 13 | 2.88 | 0.98 | 34.2 | 1.84 |
| Example 14 | 2.97 | 0.42 | 34.3 | 1.95 |
| Example 15 | 3.04 | 0.34 | 36.1 | 1.93 |
| Example 16 | 2.90 | 0.38 | 35.0 | 1.91 |
| Example 17 | 2.88 | 0.46 | 34.1 | 1.89 |
| Example 18 | 3.08 | 0.23 | 34.4 | 1.88 |
| Example 19 | 3.06 | 0.26 | 33.1 | 1.87 |
| Example 20 | 2.94 | 0.33 | 30.6 | 2.00 |
| Example 21 | 2.91 | 0.35 | 32.6 | 2.03 |
| Example 22 | 2.86 | 0.66 | 33.1 | 2.04 |
| Example 23 | 2.91 | 0.42 | 31.6 | 2.10 |
| Example 24 | 3.04 | 0.26 | 35.5 | 1.86 |
| Example 25 | 3.09 | 0.31 | 36.1 | 1.94 |
| Example 26 | 3.06 | 0.27 | 34.8 | 1.97 |
| Example 27 | 3.01 | 0.44 | 33.8 | 1.84 |
| Example 28 | 3.08 | 0.39 | 34.9 | 1.95 |
| Example 29 | 3.04 | 0.56 | 33.7 | 2.04 |
| Example 30 | 3.00 | 0.62 | 31.8 | 2.13 |
| Example 31 | 2.82 | 0.73 | 34.6 | 1.94 |
| Example 32 | 2.73 | 0.95 | 32.3 | 1.73 |
| Example 33 | 2.91 | 0.45 | 34.8 | 1.86 |
| Example 34 | 2.82 | 0.61 | 33.21 | 1.80 |
| Comparative Example 1 | 2.61 | 1.27 | 26.89 | 1.70 |

Table 3

| Item | Gram capacity at 0.1 C (mAh/g) | First-cycle efficiency (%) | Cycling capacity retention rate (%) |
|---|---|---|---|
| Example 1 | 233.4 | 89.4 | 92.0 |
| Example 2 | 227.6 | 87.1 | 88.6 |
| Example 3 | 228.4 | 87.5 | 89.1 |
| Example 4 | 226.7 | 86.5 | 88.3 |
| Example 5 | 224.9 | 85.7 | 86.4 |
| Example 6 | 226.2 | 87.2 | 87.6 |
| Example 7 | 227.4 | 87.8 | 88.2 |
| Example 8 | 225.3 | 86.2 | 85.1 |
| Example 9 | 223.1 | 82.6 | 84.2 |
| Example 10 | 229.4 | 87.6 | 88.3 |
| Example 11 | 231.1 | 88.9 | 89.1 |
| Example 12 | 228.7 | 86.3 | 86.9 |
| Example 13 | 227.1 | 85.7 | 86.1 |
| Example 14 | 229.4 | 87.2 | 88.6 |
| Example 15 | 230.2 | 88.4 | 89.2 |
| Example 16 | 228.7 | 87.6 | 87.4 |
| Example 17 | 228.0 | 86.9 | 86.5 |
| Example 18 | 230.2 | 88.2 | 86.9 |
| Example 19 | 229.4 | 87.4 | 87.1 |
| Example 20 | 227.6 | 86.8 | 85.6 |
| Example 21 | 228.4 | 86.9 | 86.4 |
| Example 22 | 235.5 | 87.1 | 84.1 |
| Example 23 | 237.2 | 86.8 | 83.4 |
| Example 24 | 231.4 | 87.9 | 86.5 |
| Example 25 | 232.4 | 88.4 | 89.2 |
| Example 26 | 230.4 | 84.6 | 88.4 |
| Example 27 | 229.3 | 87.9 | 87.4 |
| Example 28 | 230.4 | 88.4 | 88.3 |
| Example 29 | 228.7 | 87.3 | 86.7 |
| Example 30 | 227.3 | 86.8 | 85.1 |
| Example 31 | 218.7 | 80.7 | 82.2 |
| Example 32 | 216.4 | 81.2 | 81.6 |
| Example 33 | 222.8 | 83.4 | 81.1 |
| Example 34 | 221.4 | 82.2 | 80.4 |
| Comparative Example 1 | 214.3 | 77.9 | 78.2 |

Combined with Tables 1-3, brief analysis is as follows:

In the examples, before and after pickling, the lithium-rich manganese-based positive electrode material was coated with a specific primary coating raw material and a specific secondary coating raw material, respectively, and sintered, whereas in Comparative Example 1, no coating was performed. Compared with Comparative Example 1, the prepared positive electrode active material, when applied to a battery, had a higher cycling capacity retention rate.

In Examples 1-5, the sintering temperature after coating with the primary coating raw material was different. When the sintering temperature gradually increased within the range of 500-800°C, the cycling capacity retention rate first increased and then decreased. When the sintering temperature was 500°C-750°C, the cycling capacity retention rate was relatively high.

In Examples 1 and 6-9, the sintering time after coating with the primary coating raw material was different. When the sintering time gradually increased within the range of 6-15 h, the cycling capacity retention first increased and then decreased. When the sintering time was 6-12 h, the cycling capacity retention rate was relatively high.

In Examples 1 and 10-13, the sintering temperature after coating with the secondary coating raw material was different. When the sintering temperature gradually increased within the range of 350-600°C, the cycling capacity retention rate first increased and then decreased. When the sintering temperature was 350-550°C (for example, 350-450°C), the cycling capacity retention rate was relatively high, and the gram capacity and first-cycle efficiency were relatively high.

In Examples 1 and 14-17, the sintering time after coating with the secondary coating raw material was different. When the sintering time gradually increased within the range of 6-15 h, the cycling capacity retention rate first increased and then decreased. When the sintering time was 6-12 h, the cycling capacity retention rate was relatively high.

In Examples 1 and 18-20, the type of the primary coating raw material was different. The positive electrode active materials all had a relatively high cycling capacity retention rate.

In Examples 1 and 21-23, the type of the secondary coating raw material was different. The positive electrode active materials all had a relatively high cycling capacity retention rate.

In Examples 1 and 24-26, the total amount of the elements Al, Ce, Zr, and B in the positive electrode active material and the thickness of the coating layer were different. An increase in the coating layer within a certain range was beneficial to the improvement of the cycling performance. Compared with an excessively large thickness, a suitable coating thickness is beneficial to uniform coating, reduction of local transition metal dissolution, reduction of capacity attenuation, and reduction of polarization. The total amount of the above specified elements in the coating layer was 2000-6000 ppm, and the thickness of the coating layer is 0.3-0.8 $\mu$m. The gram capacity, first-cycle efficiency, and cycling capacity retention rate first increased and then decreased. When the total amount of the above specified elements in the coating layer accounted for 2000-5000 ppm, the gram capacity, first-cycle efficiency, and cycling capacity retention rate were relatively high.

In Examples 1 and 27-30, the ratio of the total mass of the element Al and the element Ce in the primary coating raw material to the total mass of the element Zr and the element B in the secondary coating raw material was slightly different. When the ratio of the two was in the range of 1:(0.5-2), the cycling capacity retention rate was relatively high.

In Examples 1 and 31-34, Examples 31 and 32 indicate that no primary coating raw material was used for coating, Examples 33 and 34 indicate that no secondary coating raw material was used for coating, and Example 1 has a significantly higher cycling capacity retention rate.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

**Claims**

1.  A positive electrode active material, wherein the positive electrode active material comprises a lithium-rich manganese-based positive electrode material and a coating layer distributed on at least a portion of the surface of the lithium-rich manganese-based positive electrode material;

    the lithium-rich manganese-based positive electrode material comprises the element M, and the element M includes one or more of Mg, Nb, Cr, Ce, Fe, Ta, B, Al, V, Ti, Zr, Sn, and Mo;
    the coating layer comprises at least one of a metal oxide and a metal fluoride;
    the gram capacity of the positive electrode active material is greater than or equal to 220 mAh/g; and the positive electrode active material satisfies at least one of the following conditions (a1) to (d1):

(a1) in a refined result of an X-ray diffraction spectrum of the positive electrode active material, the oxygen defect indicator is greater than or equal to 2.12;
(b1) the microscopic stress of the positive electrode active material is 0.1-1.5%;
(c1) in a Fourier infrared spectrum of the positive electrode active material, the M-O/Mn-O peak intensity ratio is 25-40; and
(d1) the specific surface area of the positive electrode active material is 0.9 $m^2/g$ to 3.5 $m^2/g$.

2. The positive electrode active material according to claim 1, wherein the positive electrode active material satisfies at least one of the following conditions (a2) to (d2):

(a2) in a refined result of an X-ray diffraction spectrum of the positive electrode active material, the oxygen defect indicator is greater than or equal to 2.72;
(b2) the microscopic stress of the positive electrode active material is 0.1-0.8%;
(c2) in a Fourier infrared spectrum of the positive electrode active material, the M-O/Mn-O peak intensity ratio is 30-40; and
(d2) the specific surface area of the positive electrode active material is 1.5 $m^2/g$ to 2.5 $m^2/g$.

3. The positive electrode active material according to claim 1 or 2, wherein the elemental composition of the coating layer comprises one or more of the element Al, the element Ce, and the element Co, and one or more of the element Zr, the element B, and the element Ti.

4. The positive electrode active material according to claim 3, wherein the ratio of the total mass of the element Al and the element Ce to the total mass of the element Zr and the element B in the coating layer is 1:(0.5-2).

5. The positive electrode active material according to claim 3 or 4, wherein in the positive electrode active material, the total content of the element Al, the element Ce, the element Co, the element Zr, the element B, and the element Ti in the coating layer is less than or equal to 5000 ppm.

6. The positive electrode active material according to any one of claims 1-5, wherein the coating layer comprises one or more of aluminum fluoride, aluminum oxide, cerium fluoride, and cerium oxide, and one or more of zirconium oxide, zirconium fluoride, boric acid, and zirconium boride.

7. The positive electrode active material according to any one of claims 1-6, wherein the ratio of the volume average particle size Dv50 of the lithium-rich manganese-based positive electrode material to the thickness of the coating layer is (5.5-6.5):(0.2-0.8).

8. The positive electrode active material according to any one of claims 1-7, wherein the thickness of the coating layer is 0.2-0.8 $\mu$m.

9. The positive electrode active material according to any one of claims 1-8, wherein the lithium-rich manganese-based positive electrode material comprises $Li[Li_xNi_aCo_bMn_cM_a]O_{2-e}$, where $x + a + b + c + d = 1$, $x > 0$, $a > 0$, $0 < b < 0.1$, $c > 0$, $d \geq 0$, and $0 \leq e \leq 0.2$.

10. A method for preparing a positive electrode active material, comprising:

coating a lithium-rich manganese-based positive electrode material with a primary coating raw material and sintering the resultant to obtain a primary coating material;
washing the primary coating material with a solution containing an acid and/or an acid salt to obtain a pickled primary coating material; and
coating the pickled primary coating material with a secondary coating raw material and sintering the resultant to obtain the positive electrode active material;
wherein the primary coating raw material includes one or more of a metal oxide and a metal fluoride; and the secondary coating raw material includes one or more of a metal oxide, a metal fluoride, and a boride.

11. The preparation method according to claim 10, wherein during the coating of the lithium-rich manganese-based positive electrode material with the primary coating raw material and the sintering of the resultant, the sintering temperature is 500-750°C; and optionally, the sintering time is 6-12 h.

12. The preparation method according to claim 10 or 11, wherein the primary coating raw material includes one or more of the element Al, the element Ce, and the element Co; and optionally, the primary coating raw material includes one or more of aluminum fluoride, aluminum oxide, cerium fluoride, and cerium oxide.

13. The preparation method according to any one of claims 10-12, wherein during the coating of the pickled primary coating material with the secondary coating raw material and the sintering of the resultant, the sintering temperature is 350-550°C; and optionally, the sintering time is 6-12 h.

14. The preparation method according to any one of claims 10-13, wherein the secondary coating raw material includes one or more of the element Zr, the element B, and the element Ti; and optionally, the secondary coating raw material includes one or more of zirconium oxide, zirconium fluoride, boric acid, and zirconium boride.

15. The preparation method according to any one of claims 10-14, wherein the primary coating raw material includes one or more of aluminum fluoride, aluminum oxide, cerium fluoride, and cerium oxide, the secondary coating raw material includes one or more of zirconium oxide, zirconium fluoride, boric acid, and zirconium boride, and the ratio of the total mass of the element Al and the element Ce in the primary coating raw material to the total mass of the element Zr and the element B in the secondary coating raw material is 1:(0.5-2).

16. The preparation method according to any one of claims 10-15, wherein the primary coating raw material includes one or more of the element Al, the element Ce, and the element Co, the secondary coating raw material includes one or more of the element Zr, the element B, and the element Ti, and the primary coating raw material and the secondary coating raw material form a coating layer distributed on at least a portion of the surface of the lithium-rich manganese-based positive electrode material; and in the positive electrode active material, the total content of the element Al, the element Ce, the element Co, the element Zr, the element B, and the element Ti in the coating layer is less than or equal to 5000 ppm.

17. The preparation method according to any one of claims 10-16, wherein the primary coating raw material and the secondary coating raw material form a coating layer distributed on at least a portion of the surface of the lithium-rich manganese-based positive electrode material, and the thickness of the coating layer is 0.2-0.8 μm.

18. The preparation method according to any one of claims 10-17, wherein the lithium-rich manganese-based positive electrode material comprises $Li[Li_xNi_aCo_bMn_cM_a]O_{2-e}$, where $x + a + b + c + d = 1$, $x > 0$, $a > 0$, $0 < b < 0.1$, $c > 0$, $d \geq 0$, and $0 \leq e \leq 0.2$, and the element M includes one or more of Mg, Nb, Cr, Ce, Fe, Ta, B, Al, V, Ti, Zr, Sn, and Mo.

19. The preparation method according to any one of claims 10-18, wherein during the washing of the primary coating material with the solution containing the acid and/or the acid salt, the solution containing the acid and/or the acid salt comprises an organic acid and/or an organic acid salt, the pH value of the solution containing the acid and/or the acid salt is 2-8, and the washing time is 0.25-4 h; optionally, the solution containing the acid and/or the acid salt comprises one or more of citric acid, ammonium citrate, and diammonium hydrogen citrate.

20. A positive electrode plate, comprising the positive electrode active material according to any one of claims 1-9 or a positive electrode active material prepared by the method for preparing a positive electrode active material according to any one of claims 10-19.

21. A battery, comprising the positive electrode plate according to claim 20.

22. An electrical device, comprising the battery according to claim 21.

1000

**FIG. 1**

100

**FIG. 2**

**FIG. 3**

**FIG. 4**

Coat a lithium-rich manganese-based positive electrode material with a primary coating raw material and sinter the resultant to obtain a primary coating material

Wash the primary coating material with a solution containing an acid and/or an acid salt to obtain a pickled primary coating material

Coat the pickled primary coating material with a secondary coating raw material and sinter the resultant to obtain a positive electrode active material

# FIG. 5

**INTERNATIONAL SEARCH REPORT**

| International application No. |
|---|
| **PCT/CN2024/080631** |

### A. CLASSIFICATION OF SUBJECT MATTER

H01M4/36(2006.01)i; H01M4/525(2010.01)i; H01M4/505(2010.01)i

According to International Patent Classification (IPC) or to both national classification and IPC

### B. FIELDS SEARCHED

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, ENTXTC, DWPI, CNKI: 正极活性材料, +克容量, 包覆, +氧化物, +氟化物, 一次包覆, 二次包覆, 酸洗, 电池, positive electrode active material, +gram capacity, coating, +oxide, +fluoride, primary coating, secondary coating, acid wash, cell

### C. DOCUMENTS CONSIDERED TO BE RELEVANT

| Category* | Citation of document, with indication, where appropriate, of the relevant passages | Relevant to claim No. |
|---|---|---|
| Y | CN 115863571 A (CONTEMPORARY AMPEREX TECHNOLOGY CO., LTD.) 28 March 2023 (2023-03-28)<br>description, paragraphs [0146]-[0152], embodiment 19, and tables 1-3 | 1, 2, 7-9, 20-22 |
| Y | CN 105449196 A (CONTEMPORARY AMPEREX TECHNOLOGY CO., LTD.) 30 March 2016 (2016-03-30)<br>description, paragraphs [0024]-[0031] and [0076]-[0079], embodiment 27, and table 1 | 1, 2, 7-9, 20-22 |
| Y | CN 116093306 A (CONTEMPORARY AMPEREX TECHNOLOGY CO., LTD.) 09 May 2023 (2023-05-09)<br>description, paragraphs [0005]-[0009] | 1, 2, 7-9, 20-22 |
| X | CN 114261995 A (EVISION POWER TECHNOLOGY (JIANGSU) CO., LTD. et al.) 01 April 2022 (2022-04-01)<br>description, paragraph [0016], embodiment 2, and table 1 | 10, 12, 17-22 |
| A | US 2022123302 A1 (CONTEMPORARY AMPEREX TECHNOLOGY CO., LTD.) 21 April 2022 (2022-04-21)<br>entire document | 1-22 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 May 2024** | **27 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/080631**

### C. DOCUMENTS CONSIDERED TO BE RELEVANT

| Category* | Citation of document, with indication, where appropriate, of the relevant passages | Relevant to claim No. |
|---|---|---|
| A | WO 2023066394 A1 (CONTEMPORARY AMPEREX TECHNOLOGY CO., LTD.) 27 April 2023 (2023-04-27) <br> entire document | 1-22 |

Form PCT/ISA/210 (second sheet) (July 2022)

**INTERNATIONAL SEARCH REPORT**
Information on patent family members

International application No.

**PCT/CN2024/080631**

| Patent document cited in search report | | | Publication date (day/month/year) | Patent family member(s) | | | Publication date (day/month/year) |
|---|---|---|---|---|---|---|---|
| CN | 115863571 | A | 28 March 2023 | None | | | |
| CN | 105449196 | A | 30 March 2016 | None | | | |
| CN | 116093306 | A | 09 May 2023 | None | | | |
| CN | 114261995 | A | 01 April 2022 | None | | | |
| US | 2022123302 | A1 | 21 April 2022 | WO | 2021042983 | A1 | 11 March 2021 |
| | | | | US | 11417883 | B2 | 16 August 2022 |
| | | | | EP | 3920283 | A1 | 08 December 2021 |
| | | | | EP | 3920283 | A4 | 08 June 2022 |
| WO | 2023066394 | A1 | 27 April 2023 | KR | 20240046889 | A | 11 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310609601